# EUROPEAN PATENT SPECIFICATION

(11) **EP 3 885 204 B1**
(45) Date of publication and mention of the grant of the patent: **01.11.2023**
(21) Application number: 20805746.3
(22) Date of filing: 02.04.2020
(51) Int. Cl.: B60R 25/20, B60R 25/04, B60R 25/01

(54) **AUTOMOBILE CONTROL METHOD AND DEVICE BASED ON NFC AUTOMOBILE KEY, AUTOMOBILE AND STORAGE MEDIUM**
VERFAHREN UND VORRICHTUNG ZUR KRAFTFAHRZEUGSTEUERUNG BASIEREND AUF EINEM NFC-KRAFTFAHRZEUGSCHLÜSSEL, KRAFTFAHRZEUG UND SPEICHERMEDIUM
PROCÉDÉ ET DISPOSITIF DE COMMANDE D'AUTOMOBILE BASÉS SUR UNE CLÉ NFC, AUJTOMOBILE, ET SUPPORT DE STOCKAGE

(30) Priority: 16.05.2019 CN 201910410317
(43) Date of publication of application: 29.09.2021
(73) Proprietor: Guangzhou Xiaopeng Autopilot Technology Co., Ltd., Guangzhou, Guangdong 510640 (CN)
(72) Inventor: LI, Xiangrong, Guangzhou, Guangdong 510640 (CN); ZHOU, Bo, Guangzhou, Guangdong 510640 (CN); LIU, Yilin, Guangzhou, Guangdong 510640 (CN); LU, Yuzhe, Guangzhou, Guangdong 510640 (CN); HE, Guangbo, Guangzhou, Guangdong 510640 (CN)
(74) Representative: Ran, Handong
(86) International application number: PCT/CN2020/083066
(87) International publication number: WO 2020/228444

(56) References cited:
- CN-A- 102 673 517
- CN-A- 105 857 246
- CN-A- 110 065 470
- CN-U- 203 766 707
- DE-A1-102017 007 202
- US-A1- 2015 235 488
- US-A1- 2018 009 416
- US-B1- 10 131 321

## Description

### TECHNICAL FIELD

The present disclosure relates to the technical field of vehicle and, more particularly, to a vehicle control method and device based on an NFC vehicle key, a vehicle, and a storage medium.

### BACKGROUND

With the development of science and technology, vehicles have become indispensable transportation tools in people's life. During the use of vehicles, keys are necessarily used to unlock/lock the vehicle door, start/stop the engine, or perform other operations. Common vehicle keys include mechanical keys, integrated remote keys, and the like.

The mechanical keys, also referred to as blade keys, only have the function of locking and unlocking doors, they have disadvantages of being inconvenient to carry. Furthermore, the mechanical keys are passive devices, the anti-theft performance is unsatisfying.

The integrated remote keys which are usually consist of a blade key and a chip key. By adding the chip key to the blade key, the anti-theft performance of the blade key is compensated, besides, the chip key may also be used for blaring horns and finding vehicles However, such integrated remote keys have limited single function, and being inconvenient to carry since they have large size.

### SUMMARY

In view of the above-mentioned problems, the present disclosure provides a vehicle control method and device based on an NFC vehicle key, a vehicle, and a storage medium to solve the above-mentioned problems or solve at least part of the above-mentioned problems.

The present disclosure discloses a vehicle control method based on an NFC vehicle key, wherein the method is applied to a vehicle provided with an NFC Reader and an internal NFC security module, the NFC vehicle key is a user terminal with an NFC function, wherein the user terminal is provided with at least one NFC vehicle key, the method comprises:
determining, by the user terminal, a target NFC vehicle key according to a key selection instruction, and entering an NFC recognition mode when the user terminal receives the key selection instruction sent by the NFC Reader after the NFC Reader detects the user terminal, establishes an NFC channel with the user terminal and establishes a data communication channel with the internal NFC security module;
receiving, by the internal NFC security module, an associated key sent by the user terminal;
determining whether the associated key is in a preset white list to perform a first verification, and determining whether a Token message corresponding to the associated key is valid to perform a second verification;
if the associated key is in the preset white list, determining that the first verification succeeds; and if the Token message corresponding to the associated key is valid, determining that the second verification succeeds;
when the first verification and the second verification succeed, generating, by calculation, a secret key of an NFC vehicle key service using the associated key;
performing a third verification on the user terminal according to the secret key of the NFC vehicle key service; and
correspondingly controlling the vehicle when the third verification succeeds.

Preferably, the step of performing a third verification on the user terminal according to the secret key of the NFC vehicle key service comprises:
generating a random number;
generating a first temporary service secret key according to the random number and the secret key of the NFC vehicle key service;
sending the random number to the user terminal;
receiving a second temporary service secret key fed back by the user terminal according to the random number;
determining, by comparison, whether the first temporary service secret key and the second temporary service secret key are in accordance with each other; and
if the first temporary service secret key and the second temporary service secret key are in accordance with each other, determining that the third verification succeeds.

Preferably, the second temporary service secret key is generated by the user terminal based on the locally-saved secret key of the NFC vehicle key service and the random number, and the secret key of the NFC vehicle key service is bound with a vehicle identification number of the vehicle.

Preferably, the step of correspondingly controlling the vehicle includes:
controlling a vehicle door to be locked when the NFC Reader disposed at an exterior of the vehicle detects the NFC vehicle key; or
controlling the vehicle door to be unlocked when the NFC Reader disposed at an exterior of the vehicle detects the NFC vehicle key; or
controlling a vehicle engine to start when the NFC Reader disposed inside the vehicle detects the NFC vehicle key.

The embodiments of the present disclosure further disclose a vehicle control device based on an NFC vehicle key, characterized in that, the device is applied to a vehicle provided with an NFC Reader and an internal NFC security module, the NFC vehicle key is a user terminal with an NFC function, the device comprises:
an NFC recognition mode entry module, configured to, determine a target NFC vehicle key according to a key selection instruction, and enter an NFC recognition mode when the user terminal receives the key selection instruction sent by the NFC Reader after the NFC Reader detects the user terminal, establishes an NFC channel with the user terminal and establishes a data communication channel with the internal NFC security module,
an associated key receiving module, configured to receive, by the internal NFC security module, an associated key sent by the user terminal;
a first verification module, configured to determine whether the associated key is in a preset white list to perform a first verification;
a second verification module, configured to determine whether Token message corresponding to the associated key is valid to perform a second verification;
a verification determining module, configured to, determine that the first verification succeeds if the associated key is in the preset white list and determining that the second verification succeeds if the Token message corresponding to the associated key is valid;
a secret key generating module of the NFC vehicle key service, configured to generate, by calculation, a secret key of the NFC vehicle key service using the associated key when the first verification and the second verification succeed;
a third verification module, configured to perform a third verification on the user terminal according to the secret key of the NFC vehicle key service; and
a vehicle control module, configured to correspondingly control the vehicle when the third verification succeeds.

Preferably, the third verification module comprises:
a random number generation sub-module configured to generate a random number;
a first temporary service secret key generation sub-module, configured to generate a first temporary service secret key according to the random number and the secret key of the NFC vehicle key service;
a random number sending sub-module, configured to send the random number to the user terminal;
a second temporary service secret key receiving sub-module, configured to receive a second temporary service secret key fed back by the user terminal according to the random number;
a temporary service key comparison sub-module, configured to determine, by comparison, whether the first temporary service secret key and the second temporary service secret key are in accordance with each other; and
a verification determining sub-module, configured to determine that the third verification succeeds if the first temporary service secret key and the second temporary service secret key are in accordance with each other.

Preferably, the second temporary service secret key is generated by the user terminal based on the locally-saved secret key of the NFC vehicle key service and the random number, and the secret key of the NFC vehicle key service is bound with a vehicle identification number of the vehicle.

Preferably, the vehicle control module comprises:
a first vehicle control sub-module, configured to controlling a vehicle door to be locked when the NFC Reader disposed at an exterior of the vehicle detects the NFC vehicle key; or
a second vehicle control sub-module, configured to controlling the vehicle door to be unlocked when the NFC Reader disposed at an exterior of the vehicle detects the NFC vehicle key; or
a third vehicle control sub-module, configured to controlling a vehicle engine to start when the NFC Reader disposed inside the vehicle detects the NFC vehicle key.

The present disclosure further discloses a vehicle comprising a processor, a memory, and a computer program stored in the memory and to be run on the processor, wherein when the computer program is executed by the processor, the steps of the vehicle control method based on an NFC vehicle key are implemented.

The present disclosure further discloses a computer-readable storage medium having a computer program stored therein, wherein when the computer program is executed by a processor, the steps of the vehicle control method based on an NFC vehicle key are implemented.

Compared with the prior art, the technical solution of the present application has advantage as follows.

In the embodiments of the present disclosure, after an NFC Reader on a vehicle detects an NFC vehicle key, establishes an NFC channel with the NFC vehicle key and establishes a data communication channel with an internal NFC security module, a target NFC vehicle key is determined according to a selection instruction when the user terminal receives the key selection instruction sent by the NFC Reader, and the user terminal enters an NFC recognition mode; after that, the internal NFC security module receives an associated key sent by the user terminal; whether the associated key is in a white list is determined to perform a first verification, and whether Token message corresponding to the associated key is valid is determined to perform a second verification; when the first verification and the second verification succeed, a secret key of the NFC vehicle key service is generated by calculation according to the associated key, and a third verification is performed on the user terminal according to the secret key of the NFC vehicle key service; and when the third verification succeeds, the vehicle is controlled correspondingly. By adoption of the embodiments of the present disclosure, users may control the vehicle based on the NFC vehicle key without performing a selection operation on the user terminal, and the usage experience of users is improved.

### BRIEF DESCRIPTION OF THE DRAWINGS

FIG. 1 is a flow chart of the steps of a vehicle control method based on an NFC vehicle key according to an embodiment of the present disclosure;
FIG. 2 is a schematic diagram of a vehicle verification structure based on an NFC vehicle key according to an embodiment of the present disclosure;
FIG. 3 is a structural block diagram of a vehicle control device based on an NFC vehicle key according to an embodiment of the present disclosure.

### DETAILED DESCRIPTION

To make the above purposes, features and advantages of the present disclosure clearer and easily understood, the present disclosure will be described in further detail below in conjunction with the accompanying drawings and specific embodiments.

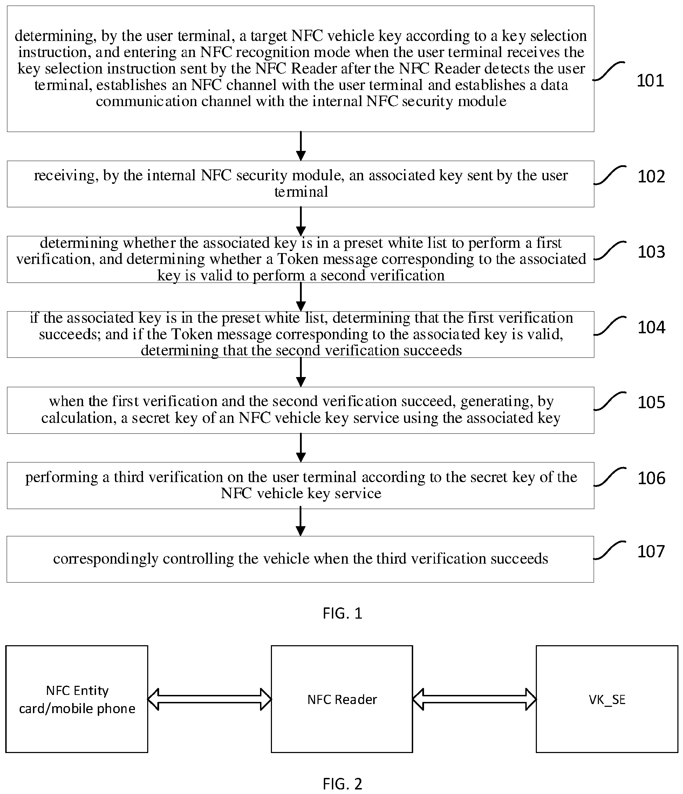

Referring to FIG. 1 which illustrates a flow chart of the steps of a vehicle control method based on an NFC vehicle key according to an embodiment of the present disclosure, the vehicle control method is applied to a vehicle which is provided with an NFC Reader and an internal NFC security module, and the NFC vehicle key is a user terminal with an NFC function.

The NFC vehicle key may be a user terminal with an NFC (Near Field Communication) function such as a mobile phone or a smart watch, and may be provided with an NFC encryption chip, and the NFC encryption chip may be an eSE (Embedded Secure Element). In addition to the user terminal with the NFC function, the NFC vehicle key may also be an NFC entity card/user card with an NFC function. The embodiments of the present disclosure have no limitation in this aspect.

The internal NFC security module (VK_SE) is installed in the vehicle and is also referred to as a lock, a security chip is integrated in the internal NFC security module, and Key_Cards are generally stored therein a white list system. Wherein, a Key_Card is a secret key of NFC virtual key service, and is a digital secret key stored in the user terminal (NFC type) or an entity card encryption chip. The Key_Card may be generated by an AES 128 algorithm and an encryptor, and is used to perform response-challenge with the internal NFC security module VK_SE (the lock cylinder) to complete authentication and output results; and one Key_Card corresponds to one vehicle and one Key_Card in the internal NFC security module (VK_SE).

In the embodiment of the present disclosure, the NFC Reader is further installed on the vehicle and is used to read data of the NFC vehicle key. The NFC Reader may be installed inside the vehicle (in an armrest box of the vehicle) or installed at the exterior of the vehicle (on a B-pillar of the vehicle), or the NFC Readers are installed both inside the vehicle and at the exterior of the vehicle. In practical application, the NFC vehicle key is made by users to approach the NFC Reader, so that the NFC Reader may read data of the NFC vehicle key.

Specifically, the vehicle control method based on the NFC vehicle key may include the following steps:
Step 101: after the NFC Reader detects the user terminal, establishes an NFC channel with the user terminal and establishes a data communication channel with the internal NFC security module, the user terminal is configured to determine a target NFC vehicle key and enters an NFC recognition mode according to a key selection instruction when the user terminal receives the key selection instruction sent by the NFC Reader.

In the embodiment of the present disclosure, when detecting the NFC vehicle key of the user terminal, the NFC Reader is powered on to establish the NFC channel with the NFC vehicle key and establishes the data communication channel with the internal NFC security module (VK_SE), and then, data communication between modules may be carried out by means of these channels.

When the user terminal approaches the vehicle, the NFC Reader of the vehicle sends an application identifier (AID) to the user terminal, and the user terminal selects the target NFC vehicle key according to the application identifier (AID) and enters the NFC recognition mode to perform off-line authentication with the vehicle. Generally, at least one NFC vehicle key is configured in the user terminal, and the user terminal may select the corresponding target NFC vehicle key according to the application identifier (AID), so that users may select the target NFC vehicle key without manually opening the user terminal by themselves, and the usage experience of near-field, screen-off and non-card selection is realized. In addition, in practical application, a default NFC vehicle key may be configured on the user terminal, and when the application identifier (AID) sent by the NFC Reader of the vehicle is received, the user terminal enters the NFC recognition mode according to the application identifier (AID), so that manual selection by users is avoided.

As can be known from above, the user terminal may enter the NFC recognition mode in the following two manners:
first manner: a default NFC vehicle key is set. When the user terminal approaches the vehicle, the application identifier (AID) is sent to the user terminal by means of the NFC Reader of the vehicle, and the user terminal enters the NFC recognition mode and performs off-line authentication with the vehicle, so that the usage experience of near-field, screen-off and non-card selection is realized;
second manner: no default card is set, and cooperation with the user terminal is needed; when the user terminal approaches the vehicle, the application identifier (AID) is sent by means of the NFC Reader of the vehicle; the user terminal automatically selects the corresponding target NFC vehicle key according to the application identifier (AID) and then selects an NFC VK Applet (a virtual key assembly installed in a system module of the user terminal and used to manage the operating environment of the secret key of the NFC virtual key service) according to the target NFC vehicle key; and then the user terminal enters the NFC recognition mode and performs an off-line authentication with the vehicle, so that the usage experience of near-field, screen-off and non-card selection is also realized.

Step 102: the internal NFC security module receives an associated key sent by the user terminal.

When detecting the NFC vehicle key of the user terminal, the NFC Reader reads the associated key of the NFC vehicle key. The associated key is a Card_ID; when the NFC VK Applet is installed on the NFC vehicle key, the Card_ID of the user terminal is established, and one user terminal corresponds to one NFC VK Applet and one Card_ID; and one Card_ID corresponds to a plurality of Key_Card service secret keys.

Step 103: whether the associated key is in a preset white list is determined to perform a first verification, and whether a Token message corresponding to the associated key is valid is determined to perform a second verification.

In the embodiment of the present disclosure, the internal NFC security module (VK_SE) performs three times verification, that is, the secret key of the Key_Card service is verified in three steps. The first verification is intended to determine whether the Card_ID is in the white list, and the second verification is intended to verify whether the Token message of the Card_ID is valid.

Step 104: if the associated key is in the white list, the first verification succeeds; and if the Token message of the associated key is valid, the second verification succeeds.

Specifically, if the Card_ID is in the preset white list and the Token message of the Card_ID is valid, Step 105 is performed to perform a third verification.

Step 105: when the first verification and the second verification succeed, a secret key of the NFC vehicle key service is generated by calculation by means of the associated key.

When the first verification and the second verification of the three verifications both succeed, the secret key of the NFC vehicle key service is generated by calculation according to the associated key to perform a third verification of the three verifications.

In the embodiment of the present disclosure, the internal NFC security module (VK_SE) obtains the Key_Card, namely the secret key of the NFC vehicle key service, by calculation according to the Card_ID.

Step 106: the third verification is performed on the user terminal according to the secret key of the NFC vehicle key service.

In a preferred embodiment of the present disclosure, Step 106 may include the following sub-steps:
generating a random number;
generating a first temporary service secret key according to the random number and the secret key of the NFC vehicle key service;
sending the random number to the user terminal;
receiving a second temporary service secret key fed back by the user terminal according to the random number;
determining, by comparison, whether the first temporary service secret key and the second temporary service secret key are in accordance with each other; and
if the first temporary service secret key and the second temporary service secret key are in accordance with each other, determining that the third verification succeeds.

In the embodiment of the present disclosure, the internal NFC security module (VK_SE) obtains the Key_Card by calculation according to the Card_ID and generates the random number (RNG), and the first temporary service secret key (Key_Tmp1) is generated according to the random number (RNG) and the Key_Card.

The internal NFC security module (VK_SE) sends the random number (RNG) to the user terminal, and the user terminal generates the second temporary service secret key (Key_Tmp2) according to the Key_Card locally-saved in the user terminal and the random number (RNG). Wherein, the Key_Card is bound with a vehicle identification number (VIN) of the vehicle, so that the internal NFC security module (VK_SE) not only sends the random number (RNG) to the user terminal, but also sends the vehicle identification number (VIN) to the user terminal, and the user terminal obtains the Key_Card according to the vehicle identification number (VIN).

After generating the second temporary service secret key (Key_Tmp2), the user terminal sends the second temporary service secret key (Key_Tmp2) to the internal NFC security module (VK_SE), and the internal NFC security module (VK_SE) performs the third verification according to Key_Tmp1 and Key_Tmp2.

In practical application, if Key_Tmp1 and Key_Tmp2 are identical, it is determined that the verification succeeds, and at this moment, the vehicle can be controlled; otherwise, if Key_Tmp1 and Key_Tmp2 are not identical, it is determined that the verification fails, and a corresponding failure prompt is given.

Of course, in practical application, besides the above three verifications, the user terminal may also be verified in other manners, and the embodiments of the invention have no limitation in this aspect.

Step 107: when the third verification succeeds, the vehicle is controlled correspondingly.

In a preferred embodiment of the present disclosure, Step 107 may include the following steps:
controlling a vehicle door to be locked when the NFC Reader disposed at an exterior of the vehicle detects the NFC vehicle key; or
controlling the vehicle door to be unlocked when the NFC Reader disposed at an exterior of the vehicle detects the NFC vehicle key; or
controlling a vehicle engine to start when the NFC Reader disposed inside the vehicle detects the NFC vehicle key.

When the three verifications all succeed, if the NFC Reader disposed at an exterior of the vehicle detects the NFC vehicle key, the vehicle door is controlled to be locked and/or unlocked. For example, if a user is about to enter the vehicle, the vehicle door can be controlled to be unlocked to be opened when the NFC Reader disposed at an exterior of the vehicle detects the NFC vehicle key; and if the user is about to leave the vehicle, the vehicle door can be controlled to be unlocked when the NFC Reader disposed at an exterior of the vehicle detects the NFC vehicle key.

When the three verifications all succeed, the vehicle engine is controlled to start if the NFC Reader disposed inside the vehicle detects the NFC vehicle key.

In the embodiments of the present disclosure, after an NFC Reader on a vehicle detects an NFC vehicle key, establishes an NFC channel with the NFC vehicle key and establishes a data communication channel with an internal NFC security module, a target NFC vehicle key is determined according to a selection instruction when the user terminal receives the key selection instruction sent by the NFC Reader, and the user terminal enters an NFC recognition mode; after that, the internal NFC security module receives an associated key sent by the user terminal; whether the associated key is in a white list is determined to perform a first verification, and whether Token message corresponding to the associated key is valid is determined to perform a second verification; when the first verification and the second verification succeed, a secret key of the NFC vehicle key service is generated by calculation according to the associated key, and a third verification is performed on the user terminal according to the secret key of the NFC vehicle key service; and when the third verification succeeds, the vehicle is controlled correspondingly. By adoption of the embodiments of the present disclosure, users may control the vehicle based on the NFC vehicle key without performing a selection operation on the user terminal, and the usage experience of users is improved.

To allow those skilled in the art to have a better understanding of the embodiments of the present disclosure, a specific example is described below. Referring to FIG. 2 which is a schematic diagram of a vehicle verification structure based on an NFC vehicle key of the present disclosure, the vehicle verification structure includes an NFC entity card/mobile phone, an NFC Reader and VK_SE, and a process for realizing vehicle verification based on the NFC vehicle key by means of this structure includes:
1. the NFC entity card/mobile phone is detected and is powered on to start NFC communication, and an NFC channel is established;
2. the NFC Reader sends an application identification (AID), and the card/mobile phone selects an NFC VK Applet;
3. the NFC entity card/mobile phone sends a Card_ID to the internal NFC security module (VK_SE), and whether the Card_ID is in a white list and whether Token message of the Card_ID is valid are verified;
4. VK_SE obtains a Key_Card by calculation according to the Card_ID, and a random number (RNG) and a temporary service secret key Key_Tmp1 are generated at the same time;
5. VK_SE sends the random number (RNG) and a VIN, the NFC entity card/mobile phone selects a corresponding service secret key Key_Card according to the VIN, and a temporary service key Key_Tmp2 is generated according to the Key_Card and RNG;
6. a response is given to the random number (RNG), Key_Tmp1 and Key_Tmp2 are verified, and a result is returned.

Finally, the vehicle is controlled correspondingly according to the result. For example, when Key_Tmp1 and Key_Tmp2 are in accordance with each other, that is, when the verification succeeds, a vehicle door may be unlocked or locked, an air condition may be turned on, or a vehicle engine may be started.

It should be noted that for the sake of a brief description, the embodiments of the method are expressed as combinations of a series of actions. But, those skilled in the art would appreciate that the embodiments of the present disclosure will not be limited by the sequences of the actions described above, and certain steps of the embodiments of the present disclosure may be performed in other sequences or synchronously. Moreover, those skilled in the art would also appreciate that the embodiments described in the specification are preferred ones, and the actions involved in these embodiments are not definitely indispensable to the embodiments of the present disclosure.

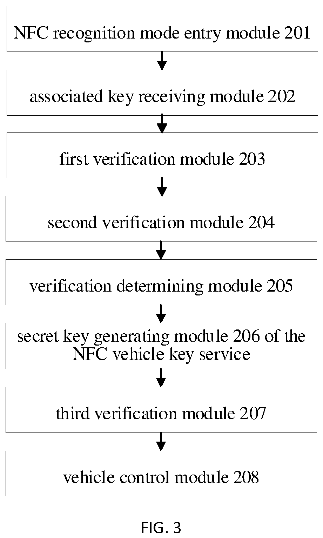

Referring to FIG. 3 which illustrates a structural block diagram of a vehicle control device based on an NFC vehicle key according to an embodiment of the present disclosure. The vehicle control device is applied to a vehicle provided with an NFC Reader and an internal NFC security module, and the NFC vehicle key is a user terminal with an NFC function. The device may specifically include the following modules:
an NFC recognition mode entry module 201, configured to, determine a target NFC vehicle key according to a key selection instruction, and enter an NFC recognition mode when the user terminal receives the key selection instruction sent by the NFC Reader after the NFC Reader detects the user terminal, establishes an NFC channel with the user terminal and establishes a data communication channel with the internal NFC security module,
an associated key receiving module 202, configured to receive, by the internal NFC security module, an associated key sent by the user terminal;
a first verification module 203, configured to determine whether the associated key is in a preset white list to perform a first verification;
a second verification module 204, configured to determine whether Token message corresponding to the associated key is valid to perform a second verification;
a verification determining module 205, configured to, determine that the first verification succeeds if the associated key is in the preset white list and determining that the second verification succeeds if the Token message corresponding to the associated key is valid;
a secret key generating module 206 of the NFC vehicle key service, configured to generate, by calculation, a secret key of the NFC vehicle key service using the associated key when the first verification and the second verification succeed;
a third verification module 207, configured to perform a third verification on the user terminal according to the secret key of the NFC vehicle key service; and
a vehicle control module 208, configured to correspondingly control the vehicle when the third verification succeeds.

Preferably, the third verification module 207 includes:
a random number generation sub-module configured to generate a random number;
a first temporary service secret key generation sub-module, configured to generate a first temporary service secret key according to the random number and the secret key of the NFC vehicle key service;
a random number sending sub-module, configured to send the random number to the user terminal;
a second temporary service secret key receiving sub-module, configured to receive a second temporary service secret key fed back by the user terminal according to the random number;
a temporary service key comparison sub-module, configured to determine, by comparison, whether the first temporary service secret key and the second temporary service secret key are in accordance with each other; and
a verification determining sub-module, configured to determine that the third verification succeeds if the first temporary service secret key and the second temporary service secret key are in accordance with each other.

Preferably, the second temporary service secret key is generated by the user terminal based on the locally-saved secret key of the NFC vehicle key service and the random number, and the secret key of the NFC vehicle key service is bound with a vehicle identification number of the vehicle.

Preferably, the vehicle control module 208 includes:
a first vehicle control sub-module, configured to controlling a vehicle door to be locked when the NFC Reader disposed at an exterior of the vehicle detects the NFC vehicle key; or
a second vehicle control sub-module, configured to controlling the vehicle door to be unlocked when the NFC Reader disposed at an exterior of the vehicle detects the NFC vehicle key; or
a third vehicle control sub-module, configured to controlling a vehicle engine to start when the NFC Reader disposed inside the vehicle detects the NFC vehicle key.

The embodiments of the device are basically similar to the embodiments of the method and thus, are briefly described. Their similarities can be understood with reference to the description of the embodiments of the method.

The embodiments of the present disclosure further disclose a vehicle comprising a processor, a memory, and a computer program stored in the memory and to be run on the processor, wherein when the computer program is executed by the processor, the steps of the vehicle control method based on an NFC vehicle key are implemented.

The embodiments of the present disclosure further disclose a computer-readable storage medium having a computer program stored therein, wherein when the computer program is executed by a processor, the steps of the vehicle control method based on an NFC vehicle key are implemented.

The embodiments in this specification are described progressively, the differences from other embodiments are emphatically described in each embodiment, and the similarities of different embodiments can be referred to mutually.

Those skilled in the art would appreciate that the embodiments of the present disclosure can be provided as a method, a device or a computer program product. So, the embodiments of the present disclosure may be completely hardware embodiments, completely software embodiments, or embodiments combining software and hardware. In addition, the embodiments of the present disclosure may be in the form of a computer program product to be implemented on one or more computer-available storage media (including, but not limited to, a disk memory, a CD-ROM, an optical memory, and the like) comprising computer-available program codes.

The embodiments of the present disclosure are described with reference to the flow chart and/or block diagram of the method, terminal device (system) and computer program product provided by the embodiments of the present disclosure. It should be understood that each process and/or block in the flow chart and/or block diagram and the combinations of processes and/or blocks in the flow chart and/or block diagram can be implemented by computer program instructions. These computer program instructions can be configured in a general-purpose computer, a special-purpose computer, an embedded processor, or a processor of other programmable data processing terminals to create a machine, so that the instructions can be executed by the computer or the processor of other programmable data processing terminals to create a device for realizing specific functions in one or more processes in the flow chart and/or in one or more blocks in the block diagram.

These computer program instructions may also be stored in a computer-readable memory that can guide the computer or other program data processing terminals to work in a specific manner, so that the instructions stored in the computer-readable memory can create a product including an instruction device, and the instruction device implements specific functions in one or more processes of the flow chart and/or one or more blocks in the block diagram.

These computer program instructions may also be loaded on a computer or other programmable data processing terminal devices, so that the computer or other programmable terminal devices can perform a series of operation steps to perform processing realized by the computer, and the instructions are executed on the computer or other programmable terminal devices to realize specific functions in one or more processes in the flow chart and/or one or more block diagrams in the block diagram.

Although the preferred embodiments of the present disclosure have been described above, those skilled in the art who have known the basic creative concept of the present disclosure can make different alterations and modifications to these embodiments. So, the appended claims are intended to include the preferred embodiments and all alterations and modifications made within the scope of the embodiments of the present disclosure.

Finally, it should be noted that relational terms in this specification such as "first" and "second" are merely used to distinguish one entity or operation from the other one, and do not definitely indicate or imply any actual relation or sequence between these entities or operations. In addition, the terms "comprise" and "include" and any other variations are intended to refer to non-exclusive inclusion, so a process, method, article or terminal device comprising a series of elements not only comprise those elements listed, but also include other elements that are not explicitly listed or inherent elements of the process, method, article or terminal device. In the absence of more restrictions, a process, method, article or terminal device comprising an element defined by "one" shall not exclusive of other identical elements.

The vehicle control method and device based on an NFC vehicle key, the vehicle, and the storage medium provided by the present disclosure are introduced in detail above. In this specification, the principle and implementation of the present disclosure are expounded by means of specific embodiments, which are described merely for assisting those skilled in the art in understanding the method and core concept of the present disclosure. Moreover, those ordinarily skilled in the art can make variations to the specific embodiments and application without departing from the scope of the present invention as defined in the appended claims. So, the contents in this specification should not be construed as limitations of the present disclosure.

## Claims

1. A vehicle control method based on an NFC vehicle key, wherein the method is applied to a vehicle provided with an NFC Reader and an internal NFC security module, the NFC vehicle key is a user terminal with an NFC function, wherein the user terminal is provided with at least one NFC vehicle key, the method comprises:
determining (101), by the user terminal, a target NFC vehicle key according to a key selection instruction, and entering an NFC recognition mode when the user terminal receives the key selection instruction sent by the NFC Reader after the NFC Reader detects the user terminal, establishes an NFC channel with the user terminal and establishes a data communication channel with the internal NFC security module;
receiving (102), by the internal NFC security module, an associated key sent by the user terminal;
determining (103) whether the associated key is in a preset white list to perform a first verification, and determining whether a Token message corresponding to the associated key is valid to perform a second verification;
if the associated key is in the preset white list, determining (104) that the first verification succeeds; and if the Token message corresponding to the associated key is valid, determining that the second verification succeeds;
**characterized in that**
when the first verification and the second verification succeed, generating (105), by calculation, a secret key of an NFC vehicle key service using the associated key;
performing (106) a third verification on the user terminal according to the secret key of the NFC vehicle key service; and
correspondingly controlling (107) the vehicle when the third verification succeeds.

2. The method according to claim 1, **characterized in that**, the step of performing a third verification on the user terminal according to the secret key of the NFC vehicle key service comprises:
generating a random number;
generating a first temporary service secret key according to the random number and the secret key of the NFC vehicle key service;
sending the random number to the user terminal;
receiving a second temporary service secret key fed back by the user terminal according to the random number;
determining, by comparison, whether the first temporary service secret key and the second temporary service secret key are in accordance with each other; and
if the first temporary service secret key and the second temporary service secret key are in accordance with each other, determining that the third verification succeeds.

3. The method according to claim 2, **characterized in that**, the second temporary service secret key is generated by the user terminal based on the locally-saved secret key of the NFC vehicle key service and the random number, and the secret key of the NFC vehicle key service is bound with a vehicle identification number of the vehicle.

4. The method according to claim 1, **characterized in that**, the step of correspondingly controlling the vehicle comprises:
controlling a vehicle door to be locked when the NFC Reader disposed at an exterior of the vehicle detects the NFC vehicle key; or
controlling the vehicle door to be unlocked when the NFC Reader disposed at an exterior of the vehicle detects the NFC vehicle key; or
controlling a vehicle engine to start when the NFC Reader disposed inside the vehicle detects the NFC vehicle key.

5. A vehicle control device based on an NFC vehicle key, the device is applied to a vehicle provided with an NFC Reader and an internal NFC security module, the NFC vehicle key is a user terminal with an NFC function, the device comprises:
an NFC recognition mode entry module (201), configured to, determine a target NFC vehicle key according to a key selection instruction, and enter an NFC recognition mode when the user terminal receives the key selection instruction sent by the NFC Reader after the NFC Reader detects the user terminal, establishes an NFC channel with the user terminal and establishes a data communication channel with the internal NFC security module,
an associated key receiving module (202), configured to receive, by the internal NFC security module, an associated key sent by the user terminal;
a first verification module (203), configured to determine whether the associated key is in a preset white list to perform a first verification;
a second verification module (204), configured to determine whether Token message corresponding to the associated key is valid to perform a second verification;
a verification determining module (205), configured to, determine that the first verification succeeds if the associated key is in the preset white list and determining that the second verification succeeds if the Token message corresponding to the associated key is valid;
**characterized in that**
a secret key generating module of the NFC vehicle key service (206), configured to generate, by calculation, a secret key of the NFC vehicle key service using the associated key when the first verification and the second verification succeed;
a third verification module (207), configured to perform a third verification on the user terminal according to the secret key of the NFC vehicle key service; and
a vehicle control module (208), configured to correspondingly control the vehicle when the third verification succeeds.

6. The device according to claim 5, **characterized in that**, the third verification module comprises:
a random number generation sub-module configured to generate a random number;
a first temporary service secret key generation sub-module, configured to generate a first temporary service secret key according to the random number and the secret key of the NFC vehicle key service;
a random number sending sub-module, configured to send the random number to the user terminal;
a second temporary service secret key receiving sub-module, configured to receive a second temporary service secret key fed back by the user terminal according to the random number;
a temporary service key comparison sub-module, configured to determine, by comparison, whether the first temporary service secret key and the second temporary service secret key are in accordance with each other; and
a verification determining sub-module, configured to determine that the third verification succeeds if the first temporary service secret key and the second temporary service secret key are in accordance with each other.

7. The device according to claim 6, **characterized in that**, the second temporary service secret key is generated by the user terminal based on the locally-saved secret key of the NFC vehicle key service and the random number, and the secret key of the NFC vehicle key service is bound with a vehicle identification number of the vehicle.

8. The device according to claim 5, **characterized in that**, the vehicle control module (208) comprises:
a first vehicle control sub-module, configured to controlling a vehicle door to be locked when the NFC Reader disposed at an exterior of the vehicle detects the NFC vehicle key; or
a second vehicle control sub-module, configured to controlling the vehicle door to be unlocked when the NFC Reader disposed at an exterior of the vehicle detects the NFC vehicle key; or
a third vehicle control sub-module, configured to controlling a vehicle engine to start when the NFC Reader disposed inside the vehicle detects the NFC vehicle key.

9. A vehicle, comprising a processor, a memory, and a computer program stored in the memory and to be run on the processor, wherein when the computer program is executed by the processor, the steps of the vehicle control method based on the NFC vehicle key according to any one of claims 1-4 are implemented.

10. A computer-readable storage medium, with a computer program stored therein, and when the computer program is executed by a processor, the steps of the vehicle control method based on the NFC vehicle key according to any one of claims 1-4 are implemented.

## Patentansprüche

1. Fahrzeugsteuerverfahren auf der Basis eines NFC-Fahrzeugschlüssels, wobei das Verfahren auf ein Fahrzeug angewendet wird, das mit einem NFC-Leser und einem internen NFC-Sicherheitsmodul ausgestattet ist, wobei der NFC-Fahrzeugschlüssel ein Benutzerendgerät mit einer NFC-Funktion ist, wobei das Benutzerendgerät mit mindestens einem NFC-Fahrzeugschlüssel ausgestattet ist, wobei das Verfahren Folgendes beinhaltet:
Bestimmen (101), durch das Benutzerendgerät, eines Ziel-NFC-Fahrzeugschlüssels gemäß einem Schlüsselauswahlbefehl und Eintreten in einen NFC-Erkennungsmodus, wenn das Benutzerendgerät den vom NFC-Leser gesendeten Schlüsselauswahlbefehl empfängt, nachdem der NFC-Leser das Benutzerendgerät erfasst hat, einen NFC-Kanal mit dem Benutzerendgerät einrichtet und einen Datenkommunikationskanal mit dem internen NFC-Sicherheitsmodul einrichtet;
Empfangen (102), durch das interne NFC-Sicherheitsmodul, eines von dem Benutzerendgerät gesendeten assoziierten Schlüssels,
Feststellen (103), ob der assoziierte Schlüssel in einer voreingestellten weißen Liste ist, um eine erste Verifizierung durchzuführen, und Feststellen, ob eine dem assoziierten Schlüssel entsprechende Token-Nachricht gültig ist, um eine zweite Verifizierung durchzuführen;
Feststellen (104), wenn der assoziierte Schlüssel in der voreingestellten weißen Liste ist, dass die erste Verifizierung erfolgreich ist, und Feststellen, wenn die dem assoziierten Schlüssel entsprechende Token-Nachricht gültig ist, dass die zweite Verifizierung erfolgreich ist,
**gekennzeichnet durch** Erzeugen (105), durch Berechnung, wenn die erste Verifizierung und die zweite Verifizierung erfolgreich sind, eines Geheimschlüssels eines NFC-Fahrzeugschlüsseldienstes anhand des assoziierten Schlüssels,
Durchführen (106) einer dritten Verifizierung auf dem Benutzerendgerät gemäß dem Geheimschlüssel des NFC-Fahrzeugschlüsseldienstes; und
entsprechendes Steuern (107) des Fahrzeugs, wenn die dritte Verifizierung erfolgreich ist.

2. Verfahren nach Anspruch 1, **dadurch gekennzeichnet, dass** der Schritt des Durchführens einer dritten Verifizierung auf dem Benutzerendgerät gemäß dem Geheimschlüssel des NFC-Fahrzeugschlüsseldienstes Folgendes beinhaltet:
Erzeugen einer Zufallszahl;
Erzeugen eines ersten temporären Dienstgeheimschlüssels gemäß der Zufallszahl und dem Geheimschlüssel des NFC-Fahrzeugschlüsseldienstes;
Senden der Zufallszahl zu dem Benutzerendgerät;
Empfangen eines zweiten temporären Dienstgeheimschlüssels, der von dem Benutzerendgerät gemäß der Zufallszahl zurückgesendet wird,
Feststellen, durch Vergleich, ob der erste temporäre Dienstgeheimschlüssel und der zweite temporäre Dienstgeheimschlüssel miteinander übereinstimmen; und
Feststellen, wenn der erste temporäre Dienstgeheimschlüssel und der zweite temporäre Dienstgeheimschlüssel übereinstimmen, dass die dritte Verifizierung erfolgreich ist.

3. Verfahren nach Anspruch 2, **dadurch gekennzeichnet, dass** der zweite temporäre Dienstgeheimschlüssel von dem Benutzerendgerät auf der Basis des lokal gespeicherten Geheimschlüssels des NFC-Fahrzeugschlüsseldienstes und der Zufallszahl erzeugt wird und der Geheimschlüssel des NFC-Fahrzeugschlüsseldienstes an eine Fahrzeugidentifikationsnummer des Fahrzeugs gebunden ist.

4. Verfahren nach Anspruch 1, **dadurch gekennzeichnet, dass** der Schritt des entsprechenden Steuerns des Fahrzeugs Folgendes beinhaltet:
Steuern einer Fahrzeugtür zum Verriegeln, wenn der auf der Außenseite des Fahrzeugs angeordnete NFC-Leser den NFC-Fahrzeugschlüssel erfasst; oder
Steuern der Fahrzeugtür zum Entriegeln, wenn der auf einer Außenseite des Fahrzeugs angeordnete NFC-Leser den NFC-Fahrzeugschlüssel erfasst; oder
Steuern eines Fahrzeugmotors zum Starten, wenn der im Innern des Fahrzeugs angeordnete NFC-Leser den NFC-Fahrzeugschlüssel erfasst.

5. Fahrzeugsteuergerät auf der Basis eines NFC-Fahrzeugschlüssels, wobei das Gerät auf ein Fahrzeug angewendet wird, das mit einem NFC-Leser und einem internen NFC-Sicherheitsmodul ausgestattet ist, wobei der NFC-Fahrzeugschlüssel ein Benutzerendgerät mit einer NFC-Funktion ist, wobei das Gerät Folgendes umfasst:
ein NFC-Erkennungsmodus-Eintrittsmodul (201), konfiguriert zum Bestimmen eines Ziel-NFC-Fahrzeugschlüssels gemäß einem Schlüsselauswahlbefehl und zum Eintreten in einen NFC-Erkennungsmodus, wenn das Benutzerendgerät den vom NFC-Leser gesendeten Schlüsselauswahlbefehl empfängt, nachdem der NFC-Leser das Benutzerendgerät erfasst hat, einen NFC-Kanal mit dem Benutzerendgerät einrichtet und einen Datenkommunikationskanal mit dem internen NFC-Sicherheitsmodul einrichtet,
ein Assoziierter-Schlüssel-Empfangsmodul (202), konfiguriert zum Empfangen, durch das interne NFC-Sicherheitsmodul, eines von dem Benutzerendgerät gesendeten assoziierten Schlüssels,
ein erstes Verifizierungsmodul (203), konfiguriert zum Feststellen, ob der assoziierte Schlüssel in einer voreingestellten weißen Liste ist, um eine erste Verifizierung durchzuführen;
ein zweites Verifizierungsmodul (204), konfiguriert zum Feststellen, ob die dem assoziierten Schlüssel entsprechende Token-Nachricht gültig ist, um eine zweite Verifizierung durchzuführen;
ein Verifizierungsbestimmungsmodul (205), konfiguriert zum Feststellen, dass die erste Verifizierung erfolgreich ist, wenn der assoziierte Schlüssel in der voreingestellten weißen Liste ist, und zum Feststellen, dass die zweite Verifizierung erfolgreich ist, wenn die dem assoziierten Schlüssel entsprechende Token-Nachricht gültig ist,
**gekennzeichnet durch**
ein Geheimschlüsselerzeugungsmodul des NFC-Fahrzeugschlüsseldienstes (206), konfiguriert zum Erzeugen, durch Berechnung, eines Geheimschlüssels des NFC-Fahrzeugschlüsseldienstes anhand des assoziierten Schlüssels, wenn die erste Verifizierung und die zweite Verifizierung erfolgreich sind,
ein drittes Verifizierungsmodul (207), konfiguriert zum Durchführen einer dritten Verifizierung auf dem Benutzerendgerät gemäß dem Geheimschlüssel des NFC-Fahrzeugschlüsseldienstes; und
ein Fahrzeugsteuermodul (208), konfiguriert zum entsprechenden Steuern des Fahrzeugs, wenn die dritte Verifizierung erfolgreich ist.

6. Gerät nach Anspruch 5, **dadurch gekennzeichnet, dass** das dritte Verifizierungsmodul Folgendes umfasst:
ein Zufallszahlerzeugungs-Submodul, konfiguriert zum Erzeugen einer Zufallszahl;
ein Erster-Temporärer-Dienstgeheimschlüsselerzeugungs-Submodul, konfiguriert zum Erzeugen eines ersten temporären Dienstgeheimschlüssels gemäß der Zufallszahl und dem Geheimschlüssel des NFC-Fahrzeugschlüsseldienstes;
ein Zufallszahlsende-Submodul, konfiguriert zum Senden der Zufallszahl zu dem Benutzerendgerät;
ein Zweiter-Temporärer-Dienstgeheimschlüsselempfangs-Submodul, konfiguriert zum Empfangen eines zweiten temporären Dienstgeheimschlüssels, der von dem Benutzerendgerät gemäß der Zufallszahl zurückgesendet wird,
ein Temporärer-Dienstschlüsselvergleichs-Submodul, konfiguriert zum Feststellen, durch Vergleich, ob der erste temporäre Dienstgeheimschlüssel und der zweite temporäre Dienstgeheimschlüssel miteinander übereinstimmen; und
ein Verifizierungsbestimmungs-Submodul, konfiguriert zum Feststellen, dass die dritte Verifizierung erfolgreich ist, wenn der erste temporäre Dienstgeheimschlüssel und der zweite temporäre Dienstgeheimschlüssel miteinander übereinstimmen.

7. Gerät nach Anspruch 6, **dadurch gekennzeichnet, dass** der zweite temporäre Dienstgeheimschlüssel von dem Benutzerendgerät auf der Basis des lokal gespeicherten Geheimschlüssels des NFC-Fahrzeugschlüsseldienstes und der Zufallszahl erzeugt wird, und der Geheimschlüssel des NFC-Fahrzeugschlüsseldienstes an eine Fahrzeugidentifikationsnummer des Fahrzeugs gebunden ist.

8. Gerät nach Anspruch 5, **dadurch gekennzeichnet, dass** das Fahrzeugsteuermodul (208) Folgendes umfasst:
ein erstes Fahrzeugsteuerungs-Submodul, konfiguriert zum Steuern einer Fahrzeugtür zum Verriegeln, wenn der auf einer Außenseite des Fahrzeugs angeordnete NFC-Leser den NFC-Fahrzeugschlüssel erfasst; oder
ein zweites Fahrzeugsteuerungs-Submodul, konfiguriert zum Steuern der Fahrzeugtür zum Entriegeln, wenn der auf einer Außenseite des Fahrzeugs angeordnete NFC-Leser den NFC-Fahrzeugschlüssel erfasst; oder
ein drittes Fahrzeugsteuerungs-Submodul, konfiguriert zum Steuern eines Fahrzeugmotors zum Starten, wenn der im Innern des Fahrzeugs angeordnete NFC-Leser den NFC-Fahrzeugschlüssel erfasst.

9. Fahrzeug, das Folgendes umfasst:
einen Prozessor, einen Speicher und ein in dem Speicher gespeichertes und auf dem Prozessor auszuführendes Computerprogramm, wobei bei Ausführung des Computerprogramms durch den Prozessor die Schritte des Fahrzeugsteuerverfahrens auf der Basis des NFC-Fahrzeugschlüssels nach einem der Ansprüche 1-4 implementiert werden.

10. Computerlesbares Speichermedium mit einem darin gespeicherten Computerprogramm, wobei bei Ausführung des Computerprogramms durch einen Prozessor die Schritte des Fahrzeugsteuerverfahrens auf der Basis des NFC-Fahrzeugschlüssels nach einem der Ansprüche 1-4 implementiert werden.

## Revendications

1. Procédé de commande de véhicule basé sur une clé NFC de véhicule, dans lequel le procédé est appliqué à un véhicule doté d'un lecteur NFC et d'un module de sécurité NFC interne, la clé NFC de véhicule est un terminal d'utilisateur doté d'une fonction NFC, dans lequel le terminal d'utilisateur est doté d'au moins une clé NFC de véhicule, le procédé comprend :
une détermination (101), par le terminal d'utilisateur, d'une clé NFC cible de véhicule selon une instruction de sélection de clé, et une entrée dans un mode de reconnaissance NFC lorsque le terminal d'utilisateur reçoit l'instruction de sélection de clé envoyée par le lecteur NFC après que le lecteur NFC a détecté le terminal d'utilisateur, établit un canal NFC avec le terminal d'utilisateur et établit un canal de communication de données avec le module de sécurité NFC interne ;
une réception (102), par le module de sécurité NFC interne, d'une clé associée envoyée par le terminal d'utilisateur ;
une détermination (103) du fait que la clé associée est dans une liste blanche prédéfinie pour réaliser une première vérification, et une détermination du fait qu'un message de jeton correspondant à la clé associée est valide ou non pour réaliser une deuxième vérification ;
si la clé associée est dans la liste blanche prédéfinie, une détermination (104) du fait que la première vérification réussit ; et si le message de jeton correspondant à la clé associée est valide, une détermination du fait que la deuxième vérification réussit ;
caractérisé, lorsque la première vérification et la deuxième vérification réussissent, par une génération (105), par calcul, d'une clé secrète d'un service de clé NFC de véhicule en utilisant la clé associée ;
une réalisation (106) d'une troisième vérification sur le terminal d'utilisateur selon la clé secrète du service de clé NFC de véhicule ; et
une commande (107) de manière correspondante du véhicule lorsque la troisième vérification réussit.

2. Procédé selon la revendication 1, **caractérisé en ce que** l'étape de réalisation d'une troisième vérification sur le terminal d'utilisateur selon la clé secrète du service de clé NFC de véhicule comprend :
une génération d'un nombre aléatoire ;
une génération d'une première clé secrète de service temporaire selon le nombre aléatoire et la clé secrète du service de clé NFC de véhicule ;
un envoi du nombre aléatoire au terminal d'utilisateur ;
une réception d'une seconde clé secrète de service temporaire renvoyée par le terminal d'utilisateur selon le nombre aléatoire ;
une détermination, par comparaison, de si la première clé secrète de service temporaire et la seconde clé secrète de service temporaire sont conformes ou non l'une à l'autre ; et
si la première clé secrète de service temporaire et la seconde clé secrète de service temporaire sont conformes l'une à l'autre, une détermination du fait que la troisième vérification réussit.

3. Procédé selon la revendication 2, **caractérisé en ce que** la seconde clé secrète de service temporaire est générée par le terminal d'utilisateur sur la base de la clé secrète enregistrée localement du service de clé NFC de véhicule et le nombre aléatoire, et la clé secrète du service de clé NFC de véhicule est lié à un numéro d'identification de véhicule du véhicule.

4. Procédé selon la revendication 1, **caractérisé en ce que** l'étape de commande de manière correspondante du véhicule comprend :
une commande d'une porte de véhicule pour qu'elle soit verrouillée lorsque le lecteur NFC disposé au niveau d'un extérieur du véhicule détecte la clé NFC de véhicule ; ou
une commande de la porte de véhicule pour qu'elle soit déverrouillée lorsque le lecteur NFC disposé au niveau d'un extérieur du véhicule détecte la clé NFC de véhicule ; ou
une commande d'un moteur de véhicule pour qu'il démarre lorsque le lecteur NFC disposé à l'intérieur du véhicule détecte la clé NFC de véhicule.

5. Dispositif de commande de véhicule basé sur une clé NFC de véhicule, le dispositif est appliqué à un véhicule doté d'un lecteur NFC et d'un module de sécurité NFC interne, la clé NFC de véhicule est un terminal d'utilisateur doté d'une fonction NFC, le dispositif comprend :
un module d'entrée en mode de reconnaissance NFC (201), configuré pour déterminer une clé NFC cible de véhicule selon une instruction de sélection de clé, et entrer dans un mode de reconnaissance NFC lorsque le terminal d'utilisateur reçoit l'instruction de sélection de clé envoyée par le lecteur NFC après que le lecteur NFC ait détecté le terminal d'utilisateur, établit un canal NFC avec le terminal d'utilisateur et établit un canal de communication de données avec le module de sécurité NFC interne,
un module de réception de clé associée (202), configuré pour recevoir, par le module de sécurité NFC interne, une clé associée envoyée par le terminal d'utilisateur ;
un module de première vérification (203), configuré pour déterminer le fait que la clé associée est dans une liste blanche prédéfinie ou non pour réaliser une première vérification ;
un module de deuxième vérification (204), configuré pour déterminer le fait qu'un message de jeton correspondant à la clé associée est valide ou non pour réaliser une deuxième vérification ;
un module de détermination de vérification (205), configuré pour déterminer que la première vérification réussit si la clé associée est dans la liste blanche prédéfinie et déterminer que la deuxième vérification réussit si le message de jeton correspondant à la clé associée est valide ;
**caractérisé par** un module de génération de clé secrète du service de clé NFC de véhicule (206), configuré pour générer, par calcul, une clé secrète du service de clé NFC de véhicule en utilisant la clé associée lorsque la première vérification et la deuxième vérification réussissent ;
un module de troisième vérification (207), configuré pour réaliser une troisième vérification sur le terminal d'utilisateur selon la clé secrète du service de clé NFC de véhicule ; et
un module de commande de véhicule (208), configuré pour commande de manière correspondante le véhicule lorsque la troisième vérification réussit.

6. Dispositif selon la revendication 5, **caractérisé en ce que** le module de troisième vérification comprend :
un sous-module de génération de nombre aléatoire configuré pour générer un nombre aléatoire ;
un sous-module de génération d'une première clé secrète de service temporaire, configuré pour générer une première clé secrète de service temporaire selon le nombre aléatoire et la clé secrète du service de clé NFC de véhicule ;
un sous-module d'envoi de nombre aléatoire, configuré pour envoyer le nombre aléatoire au terminal d'utilisateur ;
un sous-module de réception de seconde clé secrète de service temporaire, configuré pour recevoir une seconde clé secrète de service temporaire renvoyée par le terminal d'utilisateur selon le nombre aléatoire ;
un sous-module de comparaison de clé de service temporaire, configuré pour déterminer, par comparaison, si la première clé secrète de service temporaire et la seconde clé secrète de service temporaire sont conformes ou non l'une à l'autre ; et
un sous-module de détermination de vérification, configuré pour déterminer que la troisième vérification réussit si la première clé secrète de service temporaire et la seconde clé secrète de service temporaire sont conformes l'une à l'autre.

7. Dispositif selon la revendication 6, **caractérisé en ce que** la seconde clé secrète de service temporaire est générée par le terminal d'utilisateur sur la base de la clé secrète enregistrée localement du service de clé NFC de véhicule et le nombre aléatoire, et la clé secrète du service de clé NFC de véhicule est lié à un numéro d'identification de véhicule du véhicule.

8. Dispositif selon la revendication 5, **caractérisé en ce que** le module de commande de véhicule (208) comprend :
un premier sous-module de commande de véhicule, configuré pour commander une porte de véhicule pour qu'elle soit verrouillée lorsque le lecteur NFC disposé au niveau d'un extérieur du véhicule détecte la clé NFC de véhicule ; ou
un second sous-module de commande de véhicule, configuré pour commander la porte de véhicule pour qu'elle soit déverrouillée lorsque le lecteur NFC disposé au niveau d'un extérieur du véhicule détecte la clé NFC de véhicule ; ou
un troisième sous-module de commande de véhicule, configuré pour commander un moteur de véhicule pour qu'il démarre lorsque le lecteur NFC disposé à l'intérieur du véhicule détecte la clé NFC de véhicule.

9. Véhicule, comprenant un processeur, une mémoire, et un programme informatique stocké dans la mémoire et destiné à être exécuté sur le processeur, dans lequel lorsque le programme informatique est exécuté par le processeur, les étapes du procédé de commande de véhicule basé sur la clé NFC de véhicule selon l'une quelconque des revendications 1 à 4 sont mises en oeuvre.

10. Support de stockage lisible par ordinateur, doté d'un programme informatique stocké dessus et lorsque le programme informatique est exécuté par un processeur, les étapes du procédé de commande de véhicule basé sur la clé NFC de véhicule selon l'une quelconque des revendications 1 à 4 sont mises en oeuvre.
